# EUROPEAN PATENT APPLICATION

(11) **EP 2 000 657 A2**
(43) Date of publication of application: **10.12.2008**
(21) Application number: 08009639.9
(22) Date of filing: 27.05.2008
(51) Int. Cl.: F02M 25/08

(54) **Fuel vapor processing apparatus**

(30) Priority: 05.06.2007 JP 2007149164
(71) Applicant: AISAN KOGYO KABUSHIKI KAISHA, Obu-shi Aichi-ken (JP)
(72) Inventor: Sugiura, Masahiro, Obu-shi, Aichi-ken (JP); Nagai, Takashi, Obu-shi, Aichi-ken (JP); Sakakibara, Hitoshi, Obu-shi, Aichi-ken (JP)
(74) Representative: Kramer - Barske - Schmidtchen

(57) **Abstract**

A fuel vapor processing apparatus (30) includes a set plate (15) and a canister (16). The set plate (15) can close an attachment hole (13) of a fuel tank (12). The canister (16) includes three or more adsorption material chambers (41-44; 171-176) each housing therein an adsorption material (58) for removably adsorbing a fuel vapor. Each two adjacent adsorption chambers in communication with each other are connected in series such that an evaporated gas flows in opposite directions.

## Description

This application claims priority to Japanese patent application serial number 2007-149164, the contents of which are incorporated herein by reference.

The present invention relates to a fuel vapor processing apparatus that can prevent a fuel vapor produced within a fuel tank from diffusing into the atmosphere.

This kind of fuel vapor processing apparatus is described, for example, in Japanese Laid-Open Patent Publication No. 2003-254184. FIG. 38 is a cross-sectional view of a fuel vapor processing apparatus of this publication.

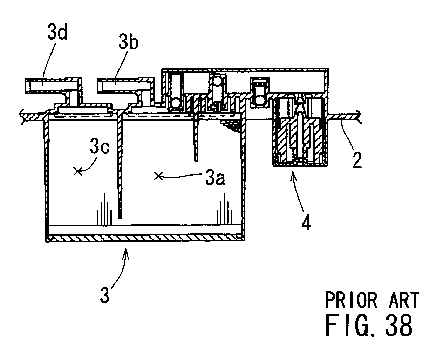

As shown in FIG. 38, a set plate 2 for closing an attachment hole of a fuel tank is provided with a canister 3 and a cutoff valve 4. The canister 3 includes first and second adsorption material chambers 3a and 3c, each of which houses therein an adsorption material for removably adsorbing a fuel vapor. The first adsorption material chamber 3a is formed with, at its upper portion, a purge port 3b that communicates with an intake pipe of an engine. The second adsorption material chamber 3c is formed with, at its upper portion, an atmospheric port 3d opening to the atmosphere. When the cutoff valve 4 is opened, an evaporated gas (also called "evaporative emission") including a fuel vapor within the fuel tank is adsorbed by the adsorption materials housed in the first and second adsorption material chambers 3a and 3c. After the removal of the fuel vapor from the evaporated gas, the air is emitted to the outside of the tank through the atmospheric port 3d. During the running of the engine, the fuel vapor adsorbed to the adsorption materials is purged into the intake pipe via the purge port 3b, while the outside air is drawn into the canister 3 via the atmospheric port 3d.

With the above known apparatus, the flow of the evaporated gas from the side of the fuel tank, i.e., the side of the cutoff valve 4, to the atmospheric port 3d is reversed only once, i.e., the gas flows down in the first adsorption material chamber 3a, and at the lower end portion thereof, the gas flow is reversed only once, and the gas then enters and flows up in the second adsorption material chamber 3c. With such an only-once flow reverse of the evaporated gas, the ratio between the passing distance L of the evaporated gas in the adsorption material chamber and the cross-sectional area D of the path in the adsorption material chamber, i.e., ratio L/D, must have a small value. Therefore, there is a problem that the capacity of the adsorption materials for adsorption of the fuel vapor thereto, i.e., so-called working capacity, is small. If the set plate 2 and the canister 3 are separately configured, the number of components and assembly steps must be increased.

Therefore, there has been a need for a fuel vapor processing apparatus that can increase the working capacity of a canister provided to a set plate that can close an attachment hole of a fuel tank.

One aspect of the present invention includes a fuel vapor processing apparatus that includes a set plate and a canister. The set plate can close an attachment hole formed in a fuel tank. The canister includes three or more adsorption material chambers each housing therein an adsorption material for adsorbing a fuel vapor contained in a gas within the fuel tank. Each two adjacent adsorption chambers in communication with each other are connected in series such that the gas flows in opposite directions from each other. With this configuration, the direction of flow of the evaporated gas in the canister is reversed for a plurality of times so that the ratio between the passing distance L of the evaporated gas in the adsorption material chamber and an average cross-sectional area D of the path in the adsorption material chambers, i.e., ratio L/D, can be increased. With the L/D ratio increased as such, the working capacity, i.e., the capacity of the adsorption materials in the respective adsorption material chambers for adsorption of any fuel vapor included in the evaporated gas, can be increased for the canister provided to the set plate for closing the attachment hole of the fuel tank.

In one embodiment, in each of the adsorption material chambers, the evaporated gas flows in a direction intersecting with the set plate or parallel thereto.

In another embodiment, the set plate is provided with a port for communication between the inside of the canister and the outside of the fuel tank. This accordingly achieves an easy pipe connection to the port of the canister.

In a further embodiment, in relation to the adsorption material chamber located in the middle of three adsorption material chambers connected in series with each other, the other two adsorption material chambers are arranged in a row or in different directions.

Another aspect of the present invention includes a fuel vapor processing apparatus for attachment to a fuel tank. The apparatus includes an inlet device, a canister and an outlet device. The inlet device serves to introduce a gas containing a fuel vapor within the fuel tank. The canister is coupled to the inlet device and serves to adsorb the fuel vapor from the gas. The outlet device is coupled to the canister and serves to discharge the gas after adsorption of the fuel vapor by the canister. The canister includes at least a first adsorption chamber, a second adsorption chamber and a third adsorption chamber connected in series with each other and each housing therein an adsorption material for adsorbing the fuel vapor. The gas can flow within the first adsorption chamber, the second adsorption chamber and the third adsorption chamber in a first direction, a second direction and a third direction, respectively. The first direction and the second directions are opposite to each other, and the second direction and the third directions are opposite to each other.

In one embodiment, the first, second and third directions are parallel to each other and may be parallel to a vertical direction or a horizontal direction.

In another embodiment, the first, second and third adsorption chambers are arranged in a horizontal direction or a vertical direction.

In a further embodiment, the first and second adsorption chambers are arranged in a direction different from a direction of arrangement of the second and third adsorption chambers.

In a still further embodiment, the first and second adsorption chambers are arranged in a direction series within a horizontal plane.

Additional objects, features, and advantages, of the present invention will be readily understood after reading the following detailed description together with the claims and the accompanying drawings, in which:
FIG. 1 is a front view of a canister module according to a first embodiment of the present invention;
FIG. 2 is a bottom view of the canister module;
FIG. 3 is a front view of a fuel vapor processing apparatus;
FIG. 4 is a plan view of the fuel vapor processing apparatus;
FIG. 5 is a cross-sectional view of the fuel vapor processing apparatus as viewed in a direction of an arrow V-V in FIG. 4;
FIG. 6 is a cross-sectional view of the fuel vapor processing apparatus taken along line VI-VI in FIG. 4;
FIG. 7 is a cross-sectional view of the fuel vapor processing apparatus taken along line VII-VII in FIG. 4;
FIG. 8 is a cross-sectional view of the fuel vapor processing apparatus taken along line VIII-VIII in FIG. 4;
FIG. 9 is a cross-sectional view of the fuel vapor processing apparatus along line IX-IX in FIG. 4;
FIG. 10 is an exploded perspective view of the primary components of the fuel vapor processing apparatus;
FIG. 11 is an exploded perspective view of a set plate and the case body of a canister as viewed from the bottom side;
FIG. 12 is a perspective view of a fuel vapor processing apparatus according to a second embodiment of the present invention;
FIG. 13 is a plan view of the fuel vapor processing apparatus;
FIG. 14 is a cross-sectional view showing the configuration of the fuel vapor processing apparatus in developed form in the circumferential direction thereof;
FIG. 15 is a cross-sectional view of a fuel vapor processing apparatus according to a third embodiment of the present invention;
FIG. 16 is a cross-sectional view of a fuel vapor processing apparatus according to a fourth embodiment of the present invention;
FIG. 17 is a cross-sectional view of a fuel vapor processing apparatus according to a fifth embodiment of the present invention;
FIG. 18 is a cross-sectional view of a fuel vapor processing apparatus according to a sixth embodiment of the present invention;
FIG. 19 is a cross-sectional view of a fuel vapor processing apparatus according to a seventh embodiment of the present invention;
FIG. 20 is a perspective view of a fuel vapor processing apparatus according to an eighth embodiment of the present invention;
FIG. 21 is a plan view of the fuel vapor processing apparatus;
FIG. 22 is a cross-sectional plan view of the fuel vapor processing apparatus;
FIG. 23 is a cross-sectional view of the fuel vapor processing apparatus taken along line XXIII-XXIII in FIG. 21;
FIG. 24 is a cross-sectional view of the fuel vapor processing apparatus taken along line XXIV-XXIV in FIG. 21;
FIG. 25 is a cross-sectional view of the fuel vapor processing apparatus taken along line XXV-XXV in FIG. 21;
FIG. 26 is a perspective view of a fuel vapor processing apparatus according to a ninth embodiment of the present invention;
FIG. 27 is a plan view of the fuel vapor processing apparatus;
FIG. 28 is a cross-sectional plan view of the fuel vapor processing apparatus;
FIG. 29 is a cross-sectional view of the fuel vapor processing apparatus taken along line XXIX-XXIX in FIG. 27;
FIG. 30 is a cross-sectional view of the fuel vapor processing apparatus taken along line XXX-XXX in FIG. 27;
FIG. 31 is a cross-sectional view of the fuel vapor processing apparatus taken along line XXXI-XXXI in FIG. 27;
FIG. 32 is a perspective view of a fuel vapor processing apparatus according to a tenth embodiment of the present invention;
FIG. 33 is a plan view of the fuel vapor processing apparatus;
FIG. 34 is a cross-sectional plan view of the fuel vapor processing apparatus;
FIG. 35 is a perspective view of a fuel vapor processing apparatus according to an eleventh embodiment of the present invention;
FIG. 36 is a plan view of the fuel vapor processing apparatus;
FIG. 37 is a cross-sectional front view of the fuel vapor processing apparatus; and
FIG. 38 is a cross-sectional view of a known fuel supply apparatus.

Each of the additional features and teachings disclosed above and below may be utilized separately or in conjunction with other features and teachings to provide improved fuel vapor processing apparatus. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

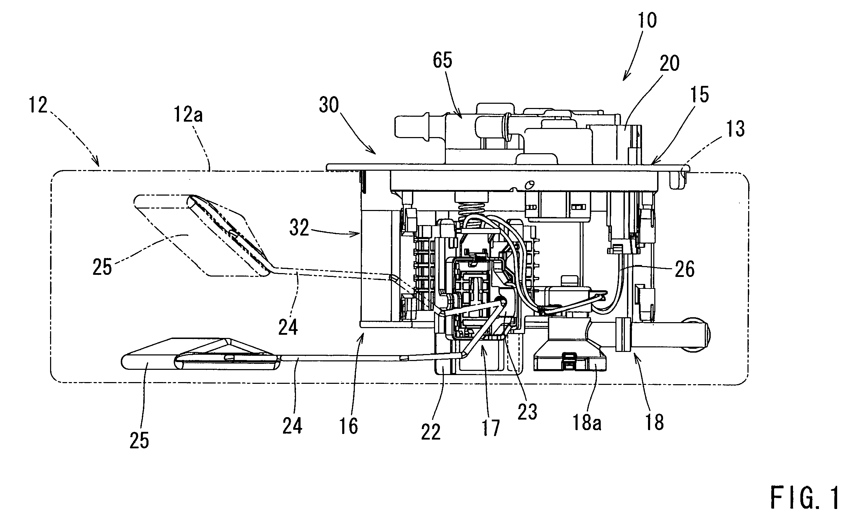

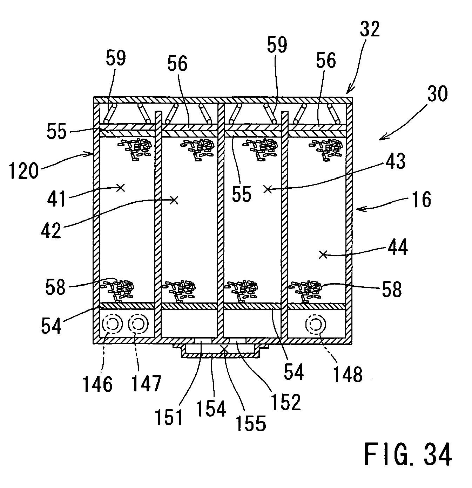

First to eleventh embodiments of the present invention will now be described with reference to FIGS. 1 to 37.

### First Embodiment

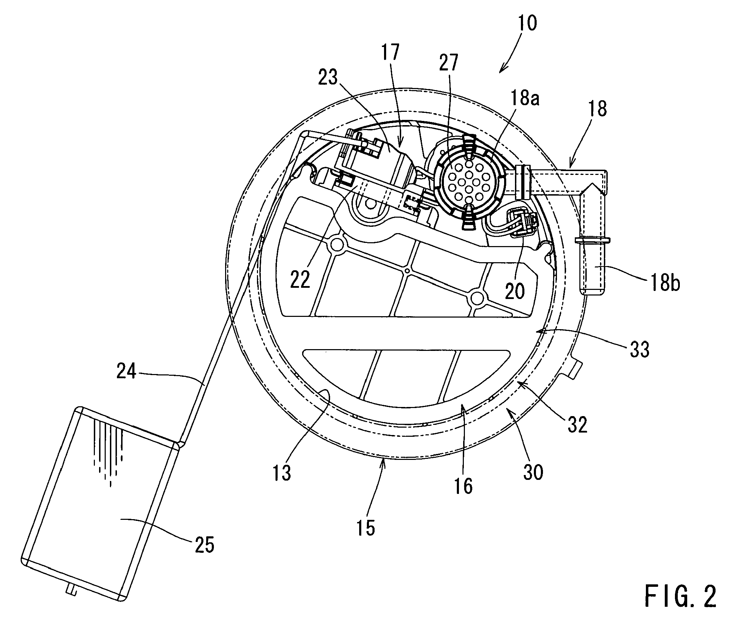

A first embodiment of the invention will now be described. A fuel vapor processing apparatus of this embodiment is modularized as a canister module together with a sender gauge, an intake pipe, and others. Therefore, the general outline of the canister module will be described first, and then a fuel vapor processing apparatus will be described. As shown in FIG. 1, a set plate 15, a canister 16, a sender gauge 17, and a suction pipe 18 (see FIG. 2) are integrated into a module, i.e., a canister module 10. The set plate 15 serves to close an attachment hole 13 formed in an upper wall portion 12a of a fuel tank 12, and the canister 16 serves to removably adsorb a fuel vapor that may be produced within the fuel tank 12. The sender gauge 17 serves to detect the remaining amount of the fuel in the fuel tank 12, and the suction pipe 18 serves to draw the fuel from the fuel tank 12. The set plate 15 and the canister 16 constitute a fuel vapor processing apparatus 30. The configuration of the fuel vapor processing apparatus 30 will be described in detail later. The set plate 15 is provided with an electrical connector section 20 for connection use between the inside and outside of the fuel tank 12. The upper-side connection portion of the electrical connector section 20 is so configured as to be connected with an electrical connector (not shown) provided externally of the tank 12.

As shown in FIG. 1, the sender gauge 17 is configured to include a gauge body 23, a gauge arm 24, and a float 25. The gauge body 23 is attached to the side surface, i.e., on the front surface side, of the canister 16 via a sender gauge adapter 22, and the gauge arm 24 is so provided as to be able to rotate with respect to the gauge body 23 (see a chain double-dashed line 24 in FIG. 1). The float 25 is attached to the free end portion of the gauge arm 24, and floats (see a chain double-dashed line 25) on the liquid surface of the fuel within the fuel tank 12. This sender gauge 17 functions as a level indicator that detects the remaining amount of the fuel in the fuel tank 12, i.e., the liquid level, based on an electric resistance value. An electric wiring 26 is electrically connected to a detection element incorporated in the gauge body 23, and is also electrically connected to the lower-side connection portion of the electrical connector section 20 of the set plate 15.

The sender gauge adapter 22 supports the suction pipe 18. At one end portion of the suction pipe 18, a suction port 18a is so formed as to be directed toward the bottom surface of the fuel tank 12. The suction port 18a is formed like a conical tube whose diameter is increased gradually toward the bottom. As shown in FIG. 2, the suction port 18a is formed with, at its open end surface, a suction filter 27 for filtering the fuel. At the other end portion of the suction pipe 18, a pipe connection port 18b is formed.

Although not shown, the pipe connection port 18b of the suction pipe 18 communicates, via a pipe member, to a fuel suction port of a jet pump of a pump module. The pump module is provided inside of another fuel tank (called "sub tank") provided in addition to the fuel tank 12 (see FIG. 1). This pump module is configured to include an electrically-operated fuel pump and the jet pump that are integrated as a module. The electrically-operated fuel pump serves to draw the fuel within the sub tank and to pressurize the fuel for supply to the engine, specifically an injector(s). The jet pump serves to transfer, by utilizing the flow of the pressurized fuel discharged from the fuel pump, the fuel in the fuel tank 12 from the suction pipe 18 into the sub tank via the pipe member.

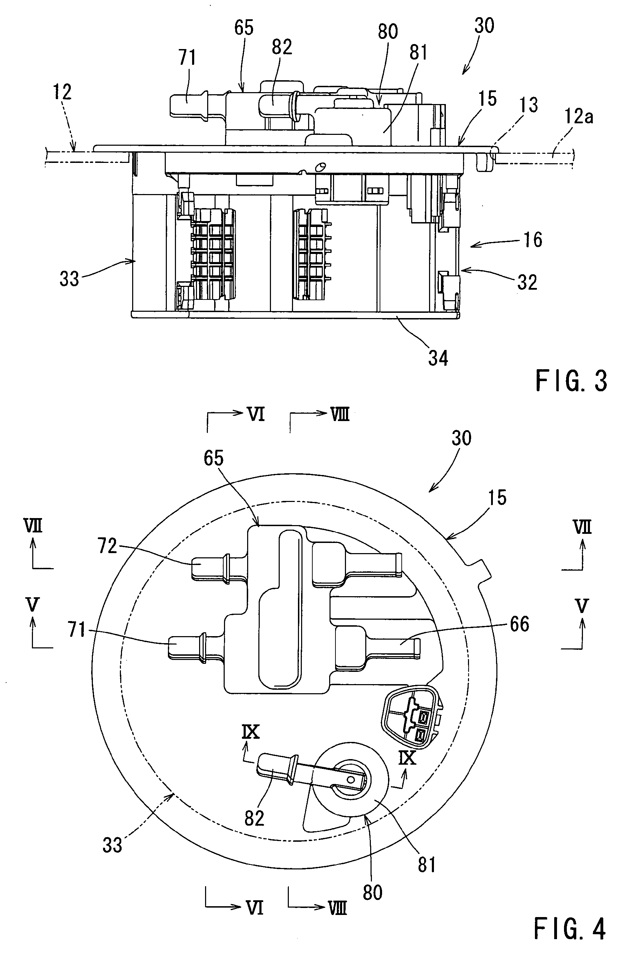

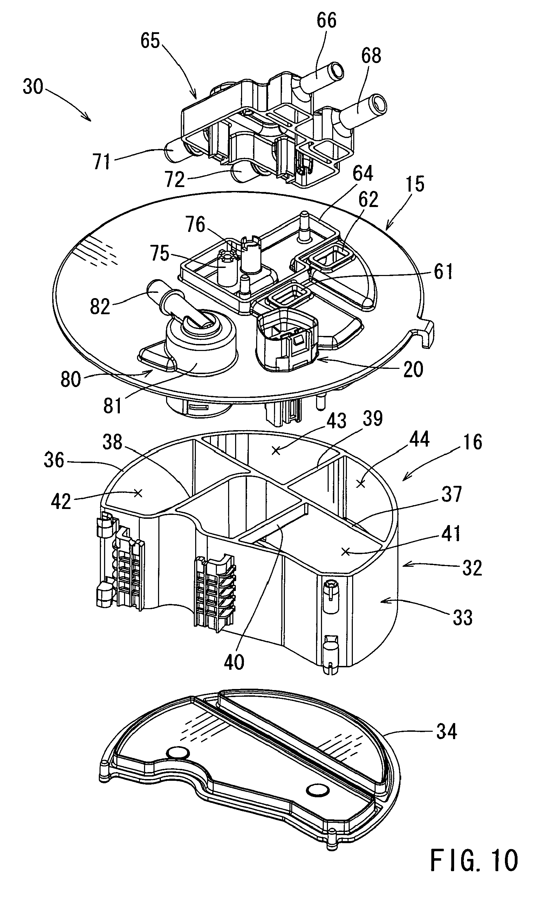

Next, the fuel vapor processing apparatus 30 will be described in detail. As shown in FIG. 3, the fuel vapor processing apparatus 30 is provided with the set plate 15, and the canister 16 modularized with the set plate 15 as described above. A case 32 of the canister 16 (hereinafter also called "canister case") is configured to include the set plate 15, a case body 33, and a lower cover member 34. The case body 33 is shaped like a hollow tube whose upper opening is closed by the set plate 15, and the lower cover member 34 serves to close the lower opening of the case body 33 (see FIG. 10). Note here that these components, i.e., the set plate 15, the case body 33, and the lower cover member 34, are each formed by a resin molding, and the set plate 15 and the lower cover member 34 are both coupled to the case body 33 by welding.

As shown in FIG. 10, the case body 33 includes a case tube section 36 shaped like a tube, a first partition plate section 37, a second partition plate section 38, and a third partition plate section 39. The first partition plate section 37 serves to partition the interior of the case tubular section 36 into two chambers, i.e., front and rear chambers. The second partition plate section 38 serves to partition the front chamber into two chambers, i.e., right and left chambers, and the third partition plate section 39 serves to partition the rear chamber into two chambers, i.e., right and left chambers. The front right chamber will be referred to as a first adsorption material chamber 41, the front left chamber will be referred to as a second adsorption material chamber 42, the rear left chamber will be referred to as a third adsorption material chamber 43, and the rear right chamber will be referred to as a fourth adsorption material chamber 44. The case body 33 is provided with a fourth partition plate section 40 for use to partition the upper end portion of the first adsorption material chamber 41 into two chambers, i.e., right and left chambers.

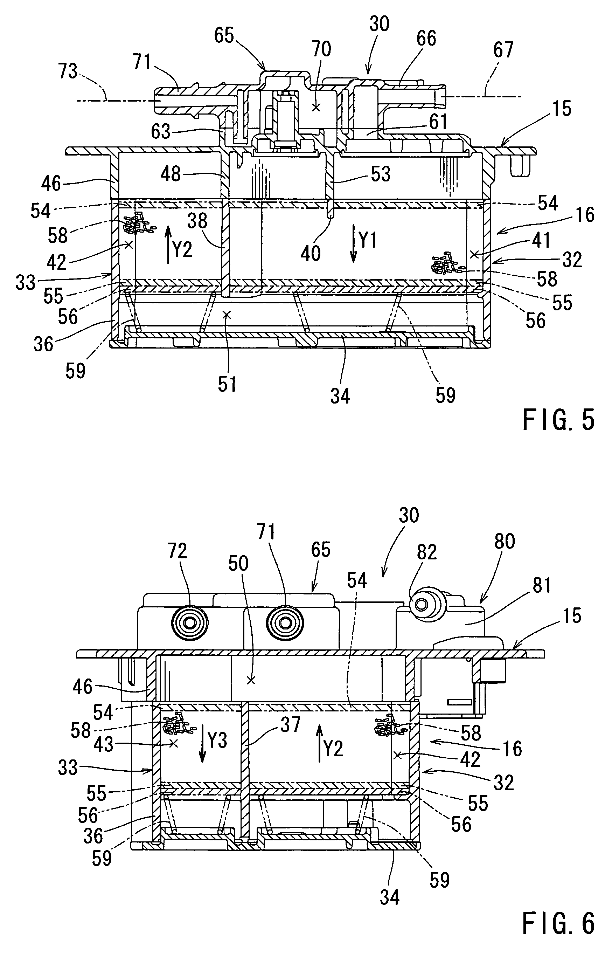

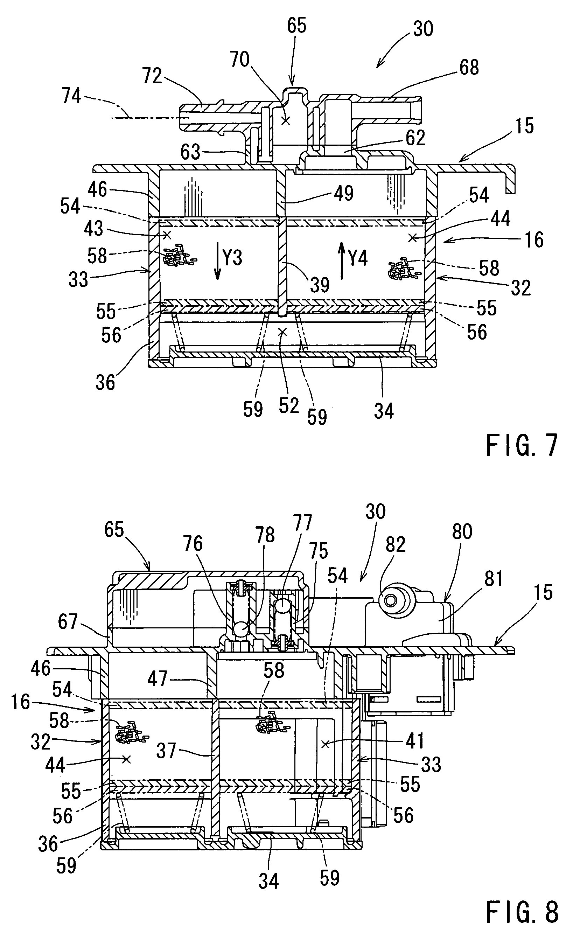

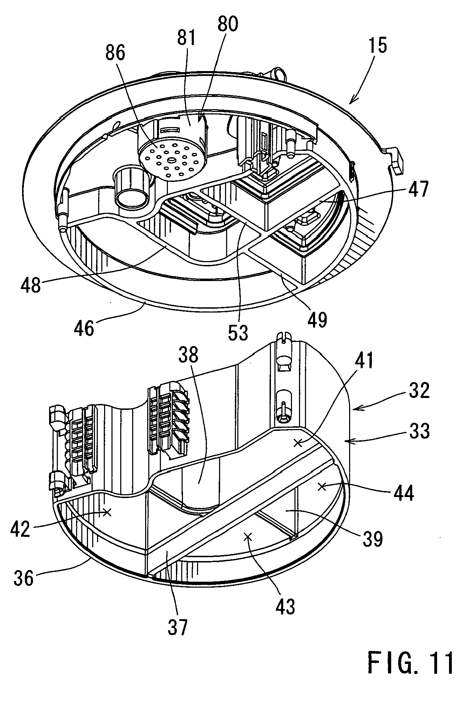

As shown in FIG. 11, on the lower side of the set plate 15, a tubular wall section 46, and first to fourth partition wall sections 47, 48, 49, and 53 are formed. The tubular wall section 46 is formed successively to the case tubular section 36 of the case body 33. The first partition wall section 47 is formed successively to the first partition plate section 37, the second partition wall section 48 is formed successively to the second partition plate section 38, the third partition wall section 49 is formed successively to the third partition plate section 39, and the fourth partition wall section 53 is formed successively to the fourth partition plate section 40. In this configuration, the first partition wall section 47 is formed successively to the first partition plate section 37 between the first and fourth adsorption material chambers 41 and 44 (see FIG. 8), but is not formed successively to the first partition plate section 37 between the second and third adsorption material chambers 42 and 43 (see FIG. 6).

Accordingly, when the set plate 15 is coupled to the case body 33, the first partition wall section 47 comes to a position successive to the first partition plate section 37 so that an upper space portion is defined between the first and fourth adsorption material chambers 41 and 44 (see FIG. 8). The first partition wall section 47 does not come to a position successive to the first partition plate section 37 between the second and third adsorption material chambers 42 and 43 (see FIG. 6). Therefore, these adsorption material chambers 42 and 43 communicate with each other via an upper space portion 50 formed between the set plate 15 and the first partition plate section 37. Also by the second partition wall section 48 being formed successively to the second partition plate section 38, another upper space portion is defined between the first and second adsorption material chambers 41 and 42 (see FIG. 5). Also by the third partition wall section 49 being formed successively to the third partition plate section 39, still another upper space portion is defined between the third and fourth adsorption material chambers 43 and 44 (see FIG. 7).

The lower cover member 34 is coupled to the lower edge portion of the case tubular section 36 and the lower edge of the first partition plate section 37 of the case body 33 (see FIGS. 6 and 8). This coupling accordingly defines a lower space portion between the first and third adsorption material chambers 41 and 43 (see FIG. 6), and also another lower space portion between the first and fourth adsorption material chambers 41 and 44 (see FIG. 8). The second and third partition plate sections 38 and 39 of the case body 33 are so arranged that their lower edge portions are positioned away from the lower cover member 34 by a predetermined space therefrom (see FIGS. 5 and 7). As such, the first and second adsorption material chambers 41 and 42 communicate with each other via a first lower space portion 51 formed between the second partition plate section 38 and the lower cover member 34 (see FIG. 5), and the third and fourth adsorption material chambers 43 and 44 communicate with each other via a second lower space portion 52 formed between the third partition plate section 39 and the lower cover member 34 (see FIG. 7).

As shown in FIGS. 5 to 8, at the upper end portion of each of the adsorption material chambers 41 to 44 in the case body 33, an upper filter member 54 is so provided as to close the corresponding upper open end. This filter member 54 is made of a nonwoven fabric, for example. At the lower end portion of each of the adsorption material chambers 41 to 44, a lower filter member 55 and a retention member 56 are provided. The lower filter member 55 is so provided as to close the corresponding lower open end, and is also made of a nonwoven fabric, for example. The retention member 56 has the air permeability, and is overlaid on the lower surface side of the filter member 55. Between the upper filter member 54 and the lower filter member 55 in each of the adsorption material chambers 41 to 44, an adsorption material 58 (such as activated carbon) is filled. Moreover, between each of the retention members 56 and the lower cover member 34, a resilient member 59 is interposed for biasing upward the corresponding retention member 56. The resilient member 59 is configured by a coil spring, or others.

The set plate 15 is formed with a first communication hole 61 (refer to FIG. 5) opening into the first adsorption material chamber 41, and a second communication hole 62 (see FIG. 7) opening into the fourth adsorption material chamber 4. A frame-shaped wall section 64 having a square shape is formed on the set plate 15 and is arranged on the left side of the communication holes 61 and 62 (see FIG. 10). On such a set plate 15, a resin-molded upper cover member 65 is joined by welding. As shown in FIG. 5, the upper cover member 65 is formed with a purge port 66 that communicates within the first adsorption material chamber 41 via the first communication hole 61. The purge port 66 communicates within an intake pipe of an engine (not shown) via a first piping member 67. Moreover, as shown in FIG. 7, the upper cover member 65 is formed with an atmospheric port 68 communicating within the fourth adsorption material chamber 44 via the second communication hole 62. The atmospheric port 68 is opened to the atmosphere.

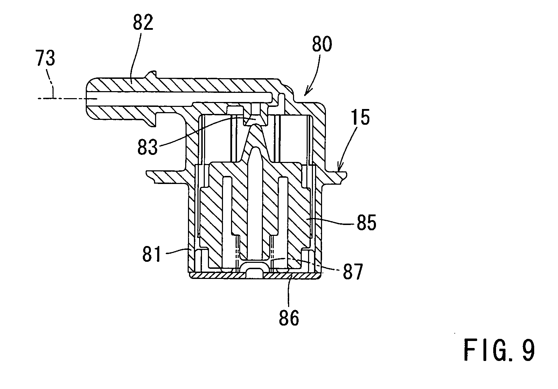

A communication chamber 70 is formed in the upper cover member 65 such that it covers and surrounds the upper opening of the frame-shaped wall section 63 when the upper cover member 65 is coupled to the set plate 15, (see FIGS. 5, 7, and 8). The upper cover member 65 is formed with front and rear evaporative ports 71 and 72, which communicate within the lower portion of the communication chamber 70 (see FIGS. 5 and 7). The front evaporative port 71 communicates with a connection port 82 (that will be described later) of a cutoff valve 80 (that will be described later; see FIG. 9) via a second piping member 73 (see FIG. 5). The rear evaporative port 72 communicates with a vapor phase region of the sub tank via a third piping member 74 (see FIG. 7). The evaporative ports 71 and 72 are called "tank ports" as they communicate within the fuel tank 12 (see FIG. 1).

As shown in FIG. 8, the set plate 15 is formed with front and rear communication ports 75 and 76 for communication between the first adsorption material chamber 41 and the communication chamber 70. A positive pressure valve 77 configured by a check valve of a ball valve type is assembled within the front communication port 75. The positive pressure valve 77 is closed in the normal circumstances, and is opened when the pressure in the communication chamber 70 exceeds a predetermined value. A negative pressure valve 78 configured by a check valve of a ball valve type is assembled within the rear communication port 76. The negative pressure valve 78 is closed in the normal circumstances, and is opened when the pressure within the adsorption material chambers exceeds a predetermined value.

As shown in FIG. 9, the cutoff valve 80 is assembled with the set plate 15. That is, the set plate 15 is formed with a cylindrical valve case section 81 whose lower surface is opened. At the upper end portion of the valve case section 81, the connection port 82 is formed for communication between the inside and outside of the case section 81. The connection port 82 communicates with the front evaporative port 71 via the second piping member 73 (see FIG. 5). Note here that the connection port 82, the second piping member 73 and the front evaporative port 71 constitute a communication path, i.e., evaporation line, for the flow of an evaporated gas from the cutoff valve 80 to the first adsorption material chamber 41. Moreover, the third piping member 74 (see FIG. 7) and the rear evaporative port 72 constitute another linkage path, i.e., evaporation line, for the flow of an evaporated gas from the sub tank (not shown) to the first adsorption material chamber 41.

As shown in FIG. 9, at the upper end portion of the valve case section 81, a valve port 83 is formed for communication with the connection port 82. In the valve case section 81, a valve body 85 is assembled such that the valve body 85 can move in the vertical direction for opening and closing the valve port 83. The valve case section 81 is provided with, at its lower opening, a lid plate 86 with air permeability. Between the valve body 85 and the lid plate 86, a balance spring 87 is interposed for biasing upward the valve body 85. The balance spring 87 is configured by a coil spring or others.

As to the cutoff valve 80 (see FIG. 9), the valve body 85 opens the valve port 83 in the normal circumstances so that the evaporated gas in the fuel tank 12 (see FIG. 1) is directed into the communication chamber 70 from the connection port 82 through the second piping member 73 and the front evaporative port 71. When a vehicle is inclined or rolled over, for example, the valve body 85 closes the valve port 83 to prevent the fuel in the fuel tank 12 from flowing to the outside through the connection port 82.

According to the fuel vapor processing apparatus 30 described above, an evaporated gas that may be produced within the fuel tank 12 (see FIG. 1). When the engine is stopped, the evaporated gas is directed into the communication chamber 70 from the connection port 82 via the second piping member 73 and the front evaporative port 71 (see FIG. 5). This is because the valve body 85 of the cutoff valve 80 (see FIG. 9) is being opened. An evaporated gas that may be produced within the sub tank is directed into the communication chamber 70 via the third piping member 74 and the rear evaporative port 72 (see FIG. 7). The evaporated gas is then directed into the first adsorption material chamber 41 via the front communication port 75 by the positive pressure valve 77 (see FIG. 8) as the positive pressure valve 77 is opened by the pressure of the evaporated gas. After flowing down in the first adsorption material chamber 41, the evaporated gas is guided into the second adsorption material chamber 42 via the lower space portion 51 of the second partition plate section 38 (see FIG. 5). After flowing up in the second adsorption material chamber 42, the evaporated gas is then guided into the third adsorption material chamber 43 via the upper space portion 50 of the first partition plate section 37 (see FIG. 6). After flowing up in the third adsorption material chamber 43, the evaporated gas is then guided into the fourth adsorption material chamber 44 via the lower space portion 52 of the third partition plate section 39, and then the gas flows up in the adsorption material chamber 44 (see FIG. 7). In this manner, the fuel vapor included in the evaporated gas is sequentially adsorbed by the adsorption material 58 filled in each of the adsorption material chambers 41 to 44 of the canister 16.

When the engine is in operation, the negative suction pressure inside of the intake pipe of the engine acts in the first adsorption material chamber 41 via the first piping member 67 and the purge port 66 (see FIG. 5). Moreover, the negative suction pressure acts in the second to fourth adsorption material chambers 42, 43, and 44 via the path (same as the flow path) for the evaporated gas. As a result, the fuel vapor that has been adsorbed to the adsorption material 58 in each of the adsorption material chambers 41 to 44 of the canister 16 is drawn into the intake pipe of the engine via the purge port 66 and the first piping member 67. As the fuel vapor is separated or removed from the adsorption members 58 of the adsorption material chambers 41 to 44 in this way, the adsorption materials 58 recover the function of adsorbing again the fuel vapor.

If the pressure in the fuel tank 12 has become less than a predetermined value when the negative suction pressure of the engine is acting or when the engine is stopped, the negative pressure acts in the communication chamber 70 via the front evaporative port 71 and/or the rear evaporative port 72 (see FIGS. 5 and 7). When the negative pressure valve 78 is opened by negative pressure (see FIG. 8), atmospheric air is introduced into the fourth, the third, the second, and the first adsorption material chambers 44, 43, 42, and 41 via the atmospheric port 68 (see FIG. 7), and then into the communication chamber 70 via the rear communication port 76. Atmospheric air guided into the link chamber 70 then flows into the fuel tank 12 and/or the sub tank (not shown) via the evaporative ports 71 and 72. With such a flow of the atmospheric air, pressure reduction in the fuel tank 12 and/or the sub tank can be prevented.

According to the fuel vapor processing apparatus 30 described above, the apparatus 30 is provided with the set plate 15 for closing the attachment hole 13 of the fuel tank 12 (see FIG. 1), and the canister 16 including the first to fourth adsorption material chambers 41 to 44 each housing therein the adsorption material 58 for removably adsorbing the fuel vapor (see FIGS. 3 to 8). In the apparatus 30, the adsorption material chambers 41 to 44 of the canister 16 communicate in series with each other, and in each two adjacent ones of the adsorption material chambers 41 and 42, 42 and 43, and 43 and 44, the direction of flow the evaporated gas in one adsorption material chamber is opposite to the direction of flow of the evaporated gas in the other material chamber. With such a configuration, the flow of the evaporated gas is reversed in direction for three times so that the working capacity of the canister 16 provided to the set plate 15 for closing the attachment hole 13 of the fuel tank 12 can be increased. This accordingly enables to set a ratio L/D to have a large value, where L denotes the passing distance of the evaporated gas and D denotes the cross-sectional area of the layer of the adsorption material 58. This is considered effective for increasing the adsorption capacity of the canister 16 for the fuel vapor in order to cope with increase of the tank capacity of the fuel tank 12.

According to the first embodiment, the first and second adsorption material chambers 41 and 42 communicate in series with each other, and with an assumption that the flow direction of the evaporated gas is downward in the first adsorption material chamber 41 (see an arrow Y1 in FIG. 5), the flow direction of the evaporated gas is upward in the second adsorption material chamber 42 oppositely to the flow in the first adsorption chamber 41 (see an arrow Y2 in FIG. 5). Similarly, the second and third adsorption material chambers 42 and 43 communicate in series with each other and with an assumption that the flow direction of the evaporated gas is upward in the second adsorption material chamber 42 (see an arrow Y2 in FIG. 6), and the flow direction of the evaporated gas in the third adsorption material chamber 43 is downward, oppositely to the flow direction within the second adsorption material chamber 42 (see an arrow Y3 in FIG. 6). Again, similarly, the third and fourth adsorption material chambers 43 and 44 communicate in series with each other and with an assumption that the flow direction of the evaporated gas is downward in the third adsorption material chamber 43 (see an arrow Y3 in FIG. 7), the flow direction of the evaporated gas in the fourth adsorption material chamber 44 is upward, oppositely to the flow direction within the third adsorption material chamber 43 (see an arrow Y4 in FIG. 7).

Moreover, the flow direction is reversed firstly as the evaporated gas flows from inside of the first adsorption material chamber 41 to inside of the second adsorption material chamber 42 (reversion from the arrow Y1 to Y2 in FIG. 5), secondly as the evaporated gas flows from inside of the second adsorption material chamber 42 to inside of the third adsorption material chamber 43 (reversion from the arrow Y2 to Y3 in FIG. 6), and thirdly as the evaporated gas flows from inside of the third adsorption material chamber 43 to inside of the fourth adsorption material chamber 44 (reversion from the arrow Y3 to Y4 in FIG. 7).

In addition, according to the first embodiment, the piping components such as hoses are not necessary for in-series communication between each two of the first to fourth adsorption material chambers 41 to 44. As a result, the air resistance of piping can be reduced, and the number of piping components can be reduced, enabling to simplify the configuration. As such, the fuel vapor processing apparatus 30 can be configured compact, and eventually, the mounting operation of the apparatus 30 on vehicles including automobiles and two-wheeled motor vehicles can be more easily facilitated.

Because the canister 16 is provided to the set plate 15, the number of components and assembly steps can be favorably reduced compared with the configuration in which the set plate 15 and the canister 16 are separately provided.

Further, in the above configuration, in the first to fourth adsorption material chambers 41 to 44 of the canister 16, the evaporated gas flows in a direction intersecting with the set plate 15, i.e., in the vertical direction (vertical direction in FIGS. 5 to 8). This accordingly enables to increase the working capacity of the canister 16. The direction of intersecting with the set plate 15 means a direction of intersecting with a plate surface of the set plate 15. In this embodiment, the plate surface of the set plate 15 extends in the horizontal direction, and the direction of intersecting with the set plate 15 is a vertical direction.

Still further, in the above embodiment, the ports serving to communicate between the inside of the canister 16 and the outside of the fuel tank are provided externally, i.e., upper surface side, of the set plate 15 (see FIG. 4). The ports include the purge port 66, the atmospheric port 68, and the evaporative ports 71 and 72. This accordingly enables to easily establish piping connections to the ports of the canister 16, i.e., the purge port 66, the atmospheric port 68, and the evaporative ports 71 and 72.

Still further, in the above embodiment, each adsorption material chamber that communicates between any two of the first to fourth adsorption material chambers 41 to 44 of the canister 16 is so disposed that the alignment direction with respect to one of the two adsorption material chambers is different from that with respect to the other of the two adsorption material chambers. That is, as shown in FIG. 10, the second adsorption material chamber 42 communicating between the first and third adsorption material chambers 41 and 43 is so disposed that the alignment direction, i.e., left and right direction, with respect to one of the adsorption material chambers 41 and 43, i.e., the first adsorption material chamber 41, is different from the alignment direction, i.e., forward and rearward direction, of the other adsorption material chamber, i.e., the third adsorption material chamber 43. Moreover, the third adsorption material chamber 43 communicating between the second and fourth adsorption material chambers 42 and 44 is so disposed that the alignment direction, i.e., forward and rearward direction, with respect to one of the adsorption material chambers 42 and 44, i.e., the second adsorption material chamber 42, is different from the alignment direction, i.e., right and left direction, of the other adsorption material chamber, i.e., the fourth adsorption material chamber 44. This accordingly increases the working capacity of the canister 16.

Furthermore, according to the fuel vapor processing apparatus 30, in the state where the upper filter member 54, the adsorption material 58, the lower filter member 55, the retention member 56, and the elastic member 59 have been assembled with each of the adsorption material chambers 41 to 44 via the lower opening of the case body 33 and where the case body 33 has been coupled to the set plate 15, the lower cover member 34 can be coupled to the case body 33 (see FIGS. 5 to 8). Accordingly, the components, i.e., the upper filter member 54, the adsorption material 58, the lower filter member 55, the retention member 56, and the elastic member 59, can be assembled with each of the adsorption material chambers 41 to 44 from the same direction. Therefore, the assembling process can be simplified.

### Second Embodiment

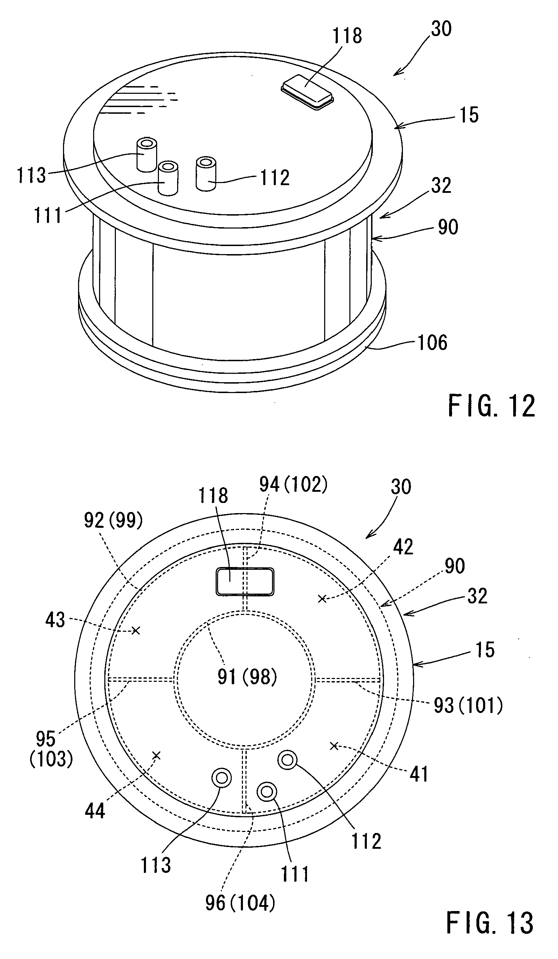

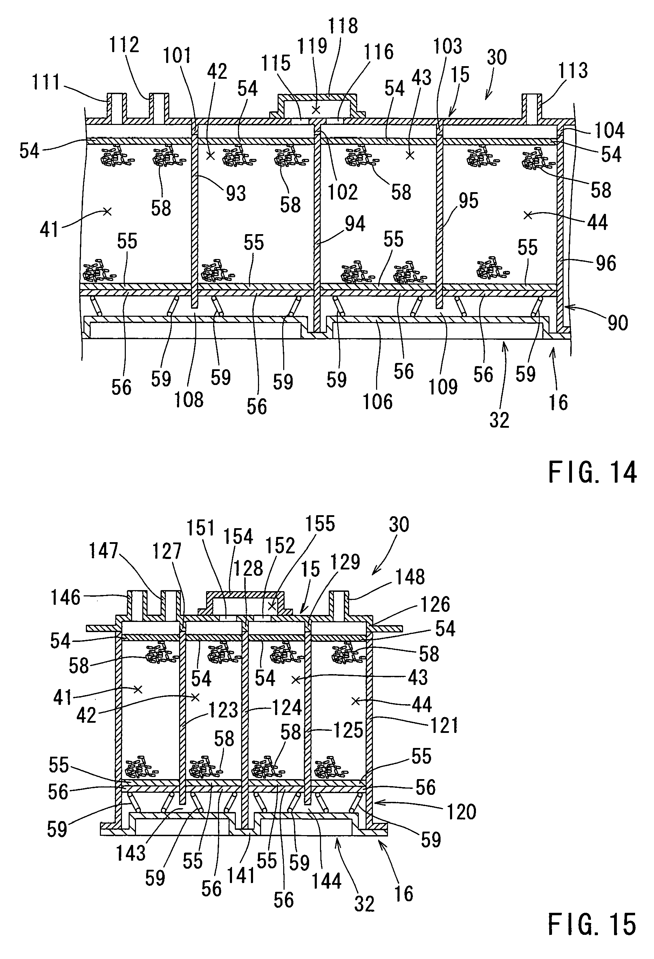

A second embodiment of the present invention will now be described. The second embodiment is partially different from the first embodiment described above, and thus only the difference is described, and any components considered the same or substantially the same as those of the first embodiment are labeled with the same reference numerals. As shown in FIGS. 12, 13, and 14, in the fuel vapor processing apparatus 30 of this embodiment, the first to fourth adsorption material chambers 41 to 44 of the canister 16 are disposed in an annular shape in the circumferential direction. A case body (labeled with a reference numeral 90) of the canister case 32 is configured to include an inner tubular section 91 and an outer tubular section 92, and first to fourth partition plate sections 93 to 96. The inner and outer tubular sections 91 and 92 form a double-tube configuration, and the first to fourth partition plate sections 93 to 96 are placed across these tubular sections 91 and 92 in the diameter direction (refer to FIG. 13). As shown in FIG. 14, the first partition plate section 93 partitions between the first and second adsorption material chambers 41 and 42. The second partition plate section 94 partitions between the second and third adsorption material chambers 42 and 43. The third partition plate section 95 partitions between the third and fourth adsorption material chambers 43 and 44. The fourth partition plate section 96 partitions between the fourth and first adsorption material chambers 44 and 41.

On the lower side of the set plate 15, tubular wall sections 98 and 99 are respectively formed successively to the tubular sections 91 and 92 of the case body 90, and partition wall sections 101 to 104 are respectively formed successively to the first to fourth partition plate sections 93 to 96 (see FIGS. 13 and 14). In the case body 90, the lower edge portions of the tubular sections 91 and 92 and those of the second and fourth partition plate sections 94 and 96 are each coupled to a lower cover member (labeled with a reference numeral 106) shaped like an annular plate (see FIG. 14).

As shown in FIG. 14, the first and third partition plate sections 93 and 95 of the case body 90 are so disposed that their lower edge portions are positioned away from the lower cover member 106 by a predetermined space therefrom. Accordingly, the first and second adsorption material chambers 41 and 42 communicate with each other via a first lower space portion 108, which is formed between the first partition plate section 93 and the lower cover member 106. Also the third and fourth adsorption material chambers 43 and 44 communicate with each other via a second lower space portion 109, which is formed between the third partition plate section 95 and the lower cover member 106.

The set plate 15 is formed with an evaporative port 111 and a purge port 112 for communication between the inside and outside of the first adsorption material chamber 41 and is also formed with an atmospheric port 113 for communication between the inside and outside of the fourth adsorption material chamber 44. The evaporative port 111 communicates with a vapor phase portion within a fuel tank via a piping member that is not shown. The purge port 112 communicates with the inside of the intake pipe of an engine via a piping member that is not shown. The atmospheric port 113 is opened to the atmosphere.

The set plate 15 is formed with first and second communication holes 115 and 116. The first communication hole 115 opens into the second adsorption material chamber 42, and the second link hole 116 opens into the third adsorption material chamber 43. A box-shaped cover member 118 with a lower opening is coupled to the set plate 15 by welding such that the cover member 118 covers the communication holes 115 and 116. Therefore, the communication holes 115 and 116 communicate with each other via an upper space portion 119 in the cover member 118.

Also with the fuel vapor processing apparatus 30 of this embodiment, the effects and advantages similar to those of the above-described first embodiment can be achieved. In addition, because the first to fourth adsorption material chambers 41 to 44 of the canister 16 are arranged in the annular shape in the circumferential direction, the electric connection section, the cutoff valve, the fuel pipe, and others, can be disposed easily and compactly mounted to the set plate 15 by using the central hollow space portion surrounded by the first to fourth adsorption material chambers 41 to 44.

### Third Embodiment

A third embodiment of the present invention will now be described. The third embodiment is partially different from the first embodiment described above, and thus only the difference is described. As shown in FIG. 15, in the fuel vapor processing apparatus 30 of this embodiment, the first to fourth adsorption material chambers 41 to 44 of the canister 16 are disposed in a row in the right and left direction. In this connection, a case body (labeled with a reference numeral 120) of the canister case 32 includes a case tubular section 121 shaped like a long square tube, and first to third partition plate sections 123 to 125 placed to extend parallel to the short side wall sections of the case tubular section 121 across the long side wall sections of the case tubular section 121. The first partition plate section 123 partitions between the first and second adsorption material chambers 41 and 42, the second partition plate section 124 partitions between the second and third adsorption material chambers 42 and 43, and the third partition plate section 125 partitions between the third and fourth adsorption material chambers 43 and 44.

On the lower side of the set plate 15, a tubular wall section 126 is formed successively to the case tubular section 121 of the case body 90, and partition wall sections 127 to 129 are formed successively to the first and third partition plate sections 123 to 125, respectively. In the case body 90, the lower edge portion of the case tubular section 121 and the lower edge portion of the second partition plate section 124 are each coupled to a lower cover member (with a reference numeral 141) shaped like a rectangular plate. The first and third partition plate sections 123 and 125 of the case body 90 are so disposed that their lower edge portions are positioned away from the lower cover member 141 by a predetermined space therefrom. Accordingly, the first and second adsorption material chambers 41 and 42 communicate with each other via a first lower space portion 143, which is formed between the first partition plate section 123 and the lower cover member 141. Also the third and fourth adsorption material chambers 43 and 44 communicate with each other via a second lower space portion 144, which is formed between the third partition plate section 125 and the lower cover member 141.

The set plate 15 is formed with an evaporative port 146 and a purge port 147 for communication between the inside and outside of the first adsorption material chamber 41 and is also formed with an atmospheric port 148 for communication between the inside and outside of the fourth adsorption material chamber 44. The evaporative port 146 communicates with a vapor phase portion of a fuel tank via a piping member (not shown). The purge port 147 communicates with the intake pipe of an engine via a piping member that is not shown. The atmospheric port 148 is opened to the atmosphere.

The set plate 15 is formed with first and second communication holes 151 and 152. The first communication hole 151 opens into the second adsorption material chamber 42, and the second communication hole 152 opens into the third adsorption material chamber 43. On the set plate 15, a box-shaped cover member 154 with an open lower surface is coupled by welding so as to cover the communication holes 151 and 152. Therefore, the communication holes 151 and 152 communicate with each other via an upper space portion 155 in the cover member 154.

Also with the fuel vapor processing apparatus 30 of this embodiment, the effects and advantages similar to those of the above-described first embodiment can be achieved. In addition, the adsorption material chamber communicating between any two of three or more of the adsorption material chambers of the canister 16 is disposed in a row with the two adsorption material chambers. That is, the second adsorption material chamber 42 commutating between the first and third adsorption material chambers 41 and 43 is disposed in a row with the first and third adsorption material chambers 41 and 43. Also, the third adsorption material chamber 43 communicating between the second and fourth adsorption material chambers 42 and 44 is disposed in a row with the second and fourth adsorption material chambers 42 and 44. This favorably increases the working capacity of the canister 16.

### Fourth Embodiment

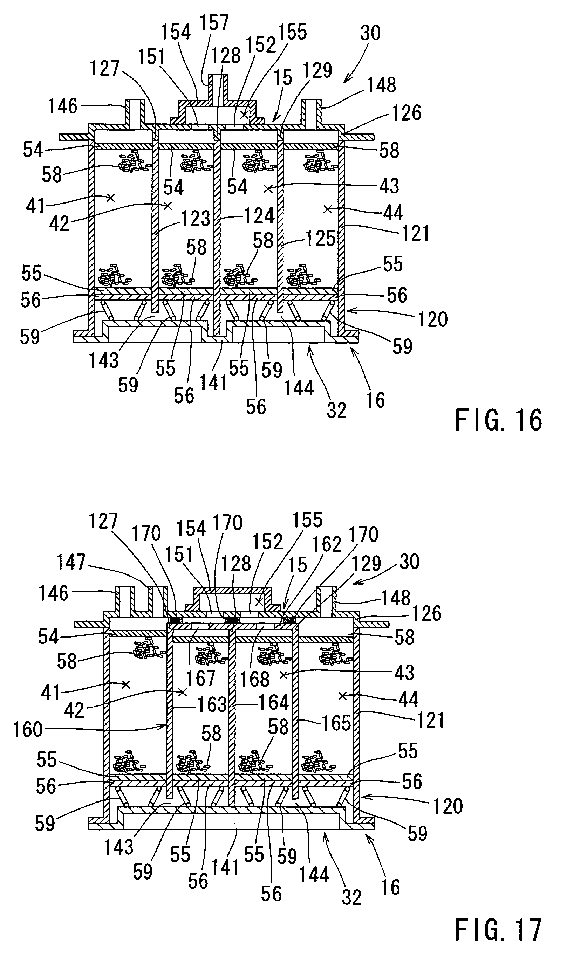

A fourth embodiment of the present invention will now be described. The fourth embodiment is partially different from the third embodiment described above, and thus only the difference is described. As shown in FIG. 16, in the fuel vapor processing apparatus 30 of this embodiment, unlike the third embodiment described above (see FIG. 15), the purge port 147 of the set plate 15 is not provided. As an alternative thereto, the cover member 154 is formed with a purge port 157 for communication between the inside and outside of the cover member 154.

Also with the fuel vapor processing apparatus 30 of this embodiment, the effects and advantages similar to those of the above-described third embodiment can be achieved. In addition, the purge port 157 is provided to the cover member 154 for communication with the first communication hole 151 of the set plate 15 opening into the second adsorption material chamber 42 and for communication with the second communication hole 152 of the set plate 15 opening into the third adsorption material chamber 43. Therefore, the fuel vapor in the chambers closer to the side of the atmospheric port 148, i.e., the third and second adsorption material chambers 42 and 43, can be purged preferentially over the fuel vapor in the first adsorption material chamber 41. This accordingly enables to prevent or reduce any possible blow-off of the evaporated gas from the evaporative port 146 to the purge port 157.

### Fifth Embodiment

A fifth embodiment of the present invention will now be described. The fifth embodiment is partially different from the third embodiment described above, and thus only the difference is only described. As shown in FIG. 17, in the fuel vapor processing apparatus 30 of this embodiment, a partition member 160 is assembled within the canister case 32 of the third embodiment above (see FIG. 15). The partition member 160 is configured to include an intermediate plate section 162, a first partition plate section 163, a second partition plate section 164 and a third partition plate section 165. The intermediate plate section 162 is overlaid on the lower surface side of the set plate 15. The first to third partition plate sections 163 to 165 are all provided on the lower surface side of the intermediate plate section 162. The intermediate plate section 162 is formed with first and second interconnection holes 167 and 168. The first interconnection hole 167 serves to communicate between the first communication hole 151 of the set plate 15 and the second adsorption material chamber 42, and the second interconnection hole 168 serves to communicate between the second communication hole 152 and the third adsorption material chamber 43. Between the set plate 15 and the intermediate plate section 162, sealing means 170 is provided for sealing between each two adjacent adsorption material chambers, i.e., adsorption material chambers 41 and 42, 42 and 43, and 43 and 44. The sealing means 170 may be a welding member, a sealing member, and others.

Also with the fuel vapor processing apparatus 30 of this embodiment, the effects and advantages similar to those of the above-described third embodiment can be achieved.

### Sixth Embodiment

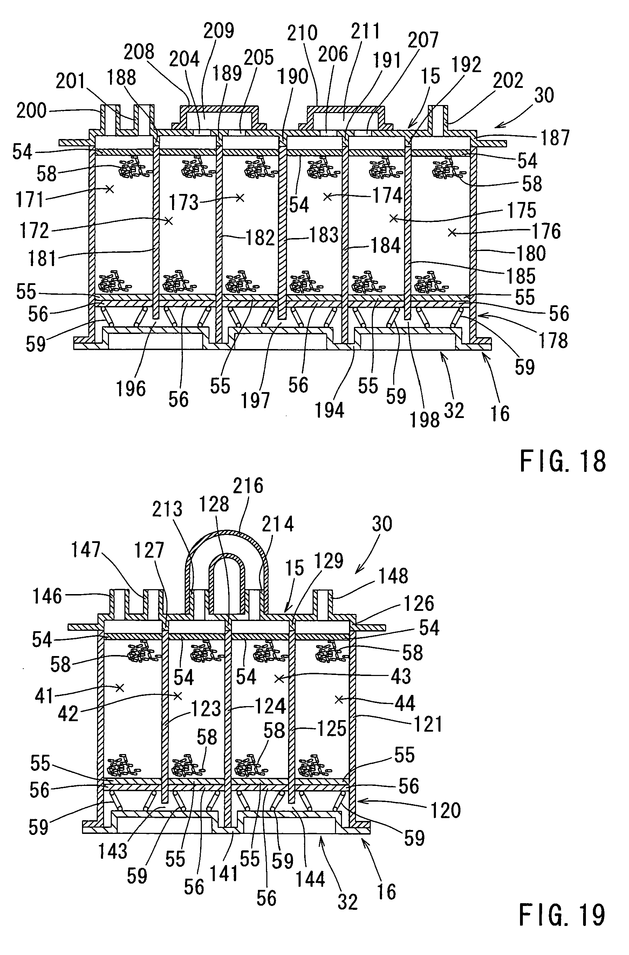

A sixth embodiment of the present invention will now be described. The sixth embodiment is partially different from the third embodiment described above, and thus only the difference is described. As shown in FIG. 18, in the fuel vapor processing apparatus 30 of this embodiment, the canister 16 includes six adsorption material chambers 171 to 176 unlike the canister 16 of the third embodiment above (see FIG. 15) including four adsorption material chambers 41 to 44. With such a configuration, a case body (labeled with a reference numeral 178) of the canister case 32 is configured to include a case tubular section 180 shaped like a long square tube, and first to fifth partition plate sections 181 to 185, which extend in parallel to the short sides of the case tubular section 180 and between the long side wall sections of the case tubular section 180. The first partition plate section 181 partitions between the first and second adsorption material chambers 171 and 172, the second partition plate section 182 partitions between the second and third adsorption material chambers 172 and 173, the third partition plate section 183 partitions between the third and fourth adsorption material chambers 173 and 174, the fourth partition plate section 184 partitions between the fourth and fifth adsorption material chambers 174 and 175, and the fifth partition plate section 185 partitions between the fifth and sixth adsorption material chambers 175 and 176.

The lower surface side of the set plate 15 is formed with a tubular wall section 187 successively to the case tubular section 180 of the case body 90, and is also formed with partition wall sections 188 to 192 successively to the first to fifth partition plate sections 181 to 185, respectively. In the case body 90, the lower edge portion of the case tubular section 180 and the lower edge portions of the second and fourth partition plate sections 182 and 184 are coupled to a lower cover member (labeled with a reference numeral 194) shaped like a long rectangular plate. The first, third, and fifth partition plate sections 181, 183, and 185 of the case body 90 are so disposed that their lower edge portions are positioned away from the lower cover member 194 by a predetermined space therefrom. Accordingly, the first and second adsorption material chambers 171 and 172 communicate with each other via a first lower space portion 196, which is formed between the first partition plate section 181 and the lower cover member 194. Also the third and fourth adsorption material chambers 173 and 174 communicate with each other via a second lower space portion 197, which is formed between the third partition plate section 183 and the lower cover member 194. Also the fifth and sixth adsorption material chambers 175 and 176 communicate with each other via a second lower space portion 198, which is formed between the fifth partition plate section 185 and the lower cover member 194.

The set plate 15 is formed with an evaporative port 200 and a purge port 201 for communication between the inside and outside of the first adsorption material chamber 171 and is also formed with an atmospheric port 202 for communication between the inside and outside of the sixth adsorption material chamber 176. The evaporative port 200 communicates with a vapor phase portion of a fuel tank via a piping member (not shown). The purge port 201 communicates within an intake pipe of an engine via a piping member that is not shown. The atmospheric port 202 is opened to the atmosphere.

The set plate 15 is formed with first to fourth communication holes 204 to 207. The first communication hole 204 is open into the second adsorption material chamber 172, the second link hole 205 is open into the third adsorption material chamber 173, the third link hole 206 is open into the fourth adsorption material chamber 174, and the fourth link hole 207 is open into the fifth adsorption material chamber 175. On the set plate 15, a box-shaped first cover member 208 with an open lower side is coupled by welding so as to cover the first and second communication holes 204 and 205. Therefore, the first and second communication holes 204 and 205 communicate with each other via a first upper space portion 209 in the first cover member 208. Also on the set plate 15, a box-shaped second cover member 210 with an open lower side is coupled by welding so as to cover the third and fourth link holes 206 and 207. Therefore, the third and fourth link holes 206 and 207 communicate with each other via a second upper space portion 211 in the second cover member 210.

Also with the fuel vapor processing apparatus 30 of this embodiment, the effects and advantages similar to those of the above-described third embodiment can be achieved. With the configuration in which the canister 16 includes the six adsorption material chambers 171 to 176, the working capacity of the canister 16 can be favorably increased.

### Seventh Embodiment

A seventh embodiment of the present invention will now be described. The seventh embodiment is partially different from the third embodiment described above, and thus only the difference is described. As shown in FIG. 19, in the fuel vapor processing apparatus 30 of this embodiment, unlike the third embodiment described above (refer to FIG. 15), the set plate 15 is not provided with the cover member 154 and the link holes 151 and 152. As alternatives thereto, the set plate 15 is formed with a first communication port 213 for communication with the second adsorption material chamber 42, and a second communication port 214 for communication with the third adsorption material chamber 43. These communication ports 213 and 214 communicate with each other via a communication pipe 216 (more specifically, an inner space of the communication pipe 216).

Also with the fuel vapor processing apparatus 30 of this embodiment, the effects and advantages similar to those of the above-described third embodiment can be achieved.

### Eighth Embodiment

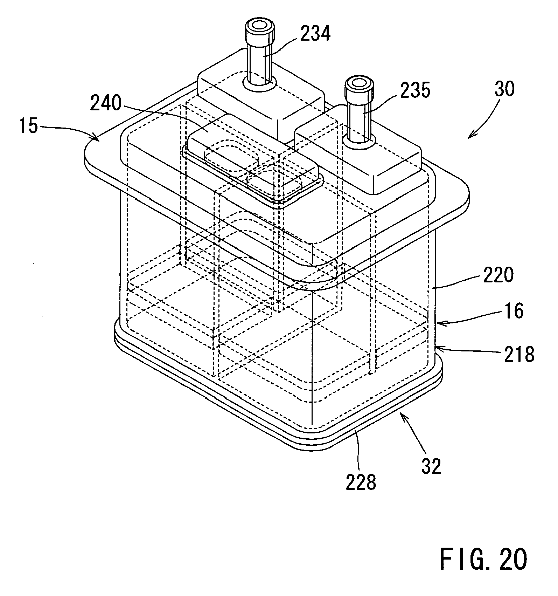

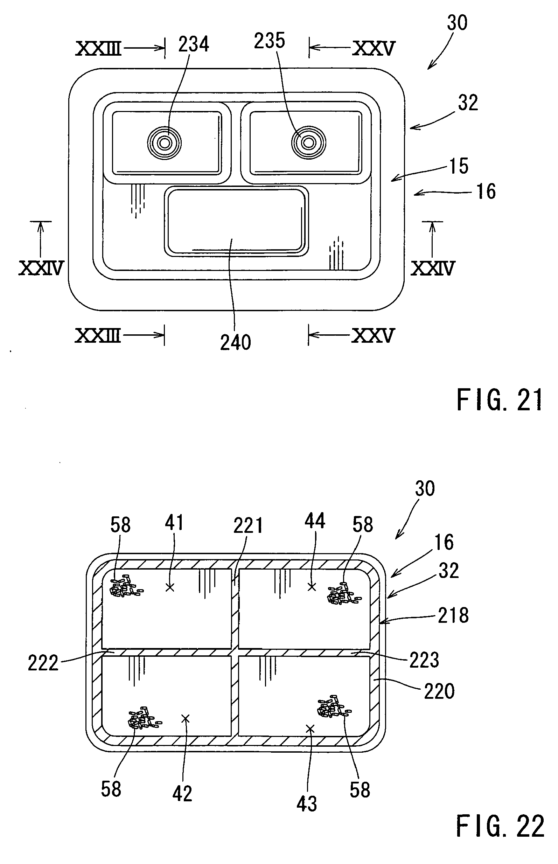

An eighth embodiment of the present invention will now be described. The eighth embodiment is partially different from the third embodiment described above, and thus only the difference is described. As shown in FIG. 20, in the fuel vapor processing apparatus 30 of this embodiment, the first to fourth adsorption material chambers 41 to 44 of the canister 16 are disposed differently from the third embodiment as described below. That is, as shown in FIG. 22, the second adsorption material chamber 42 is disposed on the front side of the first adsorption material chamber 41 (on the lower side in FIG. 22), the third adsorption material chamber 43 is disposed on the right side of the second adsorption material chamber 42, and the fourth adsorption material chamber 44 is disposed on the rear side of the third adsorption material chamber 43 (on the upper side in FIG. 22), and on the right side of the first adsorption material chamber 41. With such a configuration, a case body (labeled with a reference numeral 218) of the canister case 32 is configured to include a case tubular section 220 shaped like a tube, and first to third partition plate sections 221 to 223. The first partition plate section 221 partitions the interior of the case tubular section 220 into two (or right and left) chambers, the second partition plate section 222 partitions the left chamber into two (or front and rear) chambers, and the third partition plate section 223 partitions the right chamber into two (or front and rear) chambers. The partition plate sections 221 to 223 partition the interior of the case tubular section 220 like a cross.

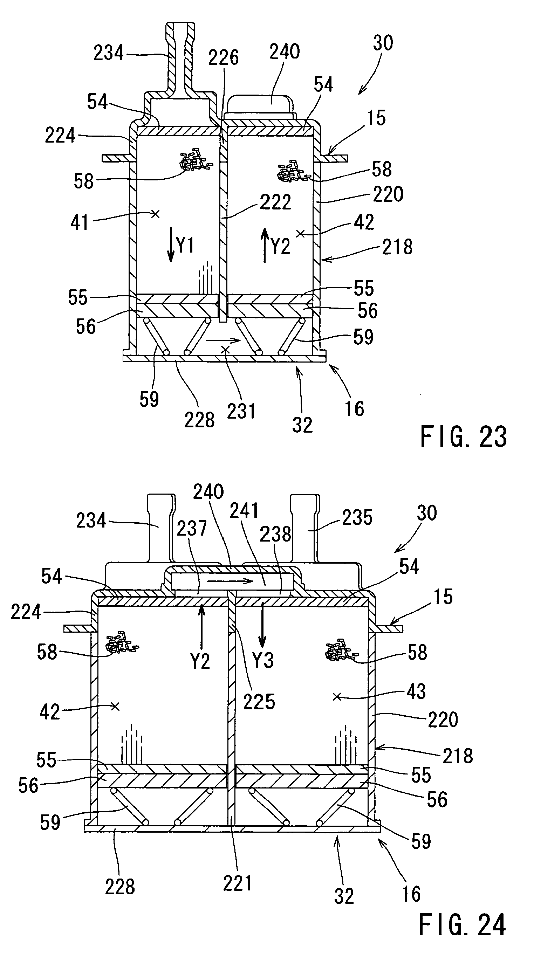

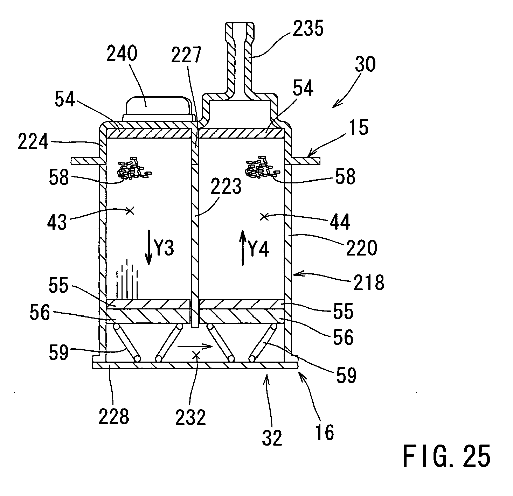

The lower side of the set plate 15 is formed with a tubular wall section 224 successively to the case tubular section 220 of the case body 218, and is also formed with partition wall sections 225 to 227 successively to the partition plate sections 221 to 222, respectively (see FIGS. 23 to 25). In the configuration, in the case body 218, the lower edge portion of the case tubular section 220 and the lower edge of the first partition plate section 221 are coupled to a lower cover member (labeled with a reference numeral 228) shaped like a rectangular plate (see FIG. 24). The second and third partition plate sections 222 and 223 of the case body 218 are so disposed that their lower edge portions are positioned away from the lower cover member 228 by a predetermined space therefrom. Accordingly, the first and second adsorption material chambers 41 and 42 communicate with each other via a first lower space portion 231, which is formed between the second partition plate section 222 and the lower cover member 228 (see FIG. 23). Also the third and fourth adsorption material chambers 43 and 44 communicate with each other via a second lower space portion 232, which is formed between the third partition plate section 223 and the lower cover member 228 (see FIG. 25).

The set plate 15 is formed with a purge port 234 for communication between the inside and outside of the first adsorption material chamber 41 (see FIG. 23). The purge port 234 serves also as an evaporative port. The set plate 15 is also formed with an atmospheric port 235 for communication between the inside and outside of the fourth adsorption material chamber 44 (see FIG. 25). The purge port 234 serving also as an evaporative port communicates with the inside of the suction pipe of an engine via a piping member (not shown) and also communicates with a vapor phase portion of a fuel tank (not shown). The atmospheric port 235 is opened to the atmosphere.

As shown in FIG. 24, the set plate 15 is formed with first and second communication holes 237 and 238. The first communication hole 237 opens into the second adsorption material chamber 42, and the second communication hole 238 opens into the third adsorption material chamber 43. On the set plate 15, a box-shaped cover member 240 with a lower opening is coupled by welding such that the cover member 240 covers the communication holes 237 and 238. Therefore, the communication holes 237 and 238 communicate with each other via an upper space portion 241 in the cover member 240.

Also with the fuel vapor processing apparatus 30 of this embodiment, the effects and advantages similar to those of the above-described third embodiment can be achieved.

### Ninth Embodiment

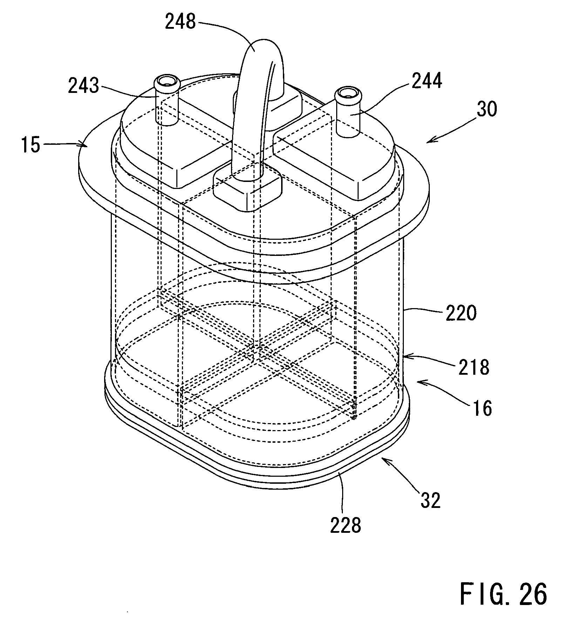

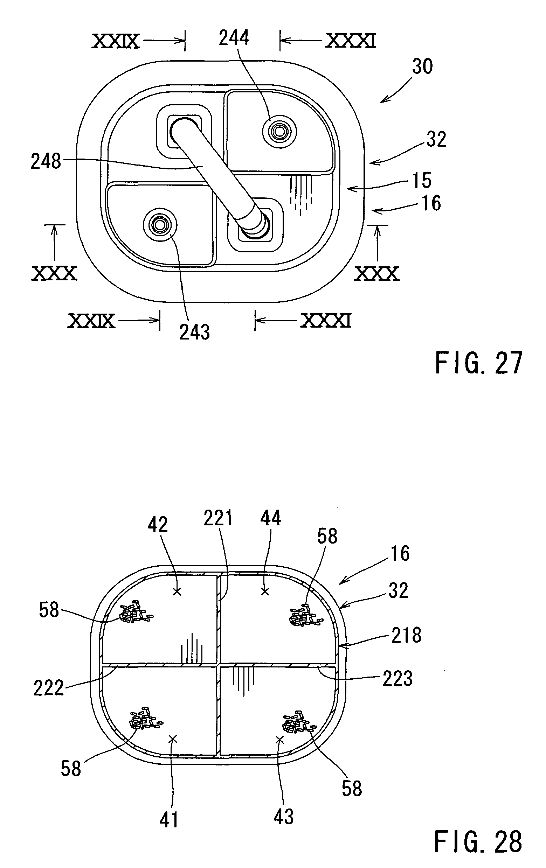

A ninth embodiment of the present invention will now be described. The ninth embodiment is partially different from the eighth embodiment described above, and thus only the difference is described. As shown in FIG. 26, in the fuel vapor processing apparatus 30 of this embodiment, the first to fourth adsorption material chambers 41 to 44 of the canister 16 are arranged in a different manner from the eighth embodiment as described below. That is, as shown in FIG. 28, the second adsorption material chamber 42 is disposed on the rear side of the first adsorption material chamber 41 (on the upper side in FIG. 28), the fourth adsorption material chamber 44 is disposed on the right side of the second adsorption material chamber 42, and the third adsorption material chamber 43 is disposed on the front side of the fourth adsorption material chamber 44 (on the lower side in FIG. 28), and on the right side of the first adsorption material chamber 41. The case body 218 and the lower cover member 228 are of the same configuration as those in the eighth embodiment.

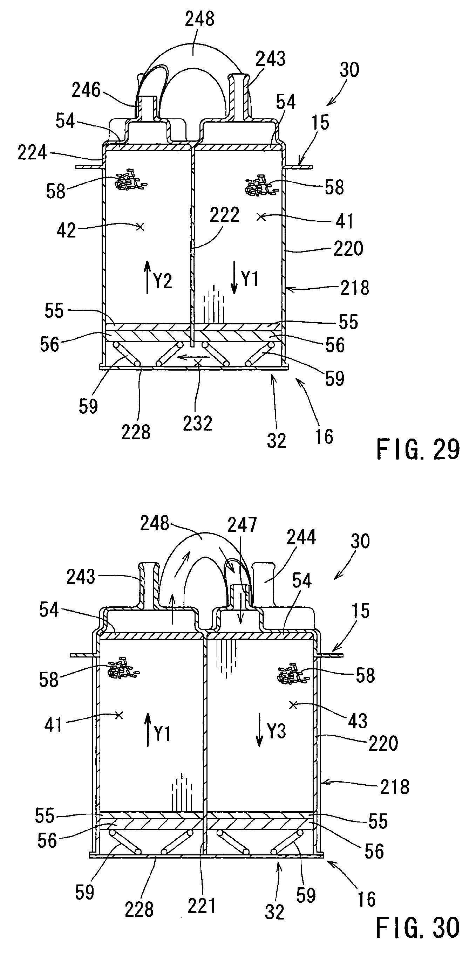

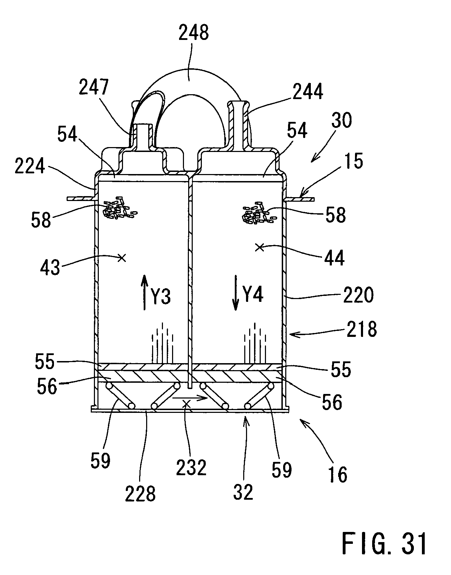

The set plate 15 is formed with a purge port 243 for communication between the inside and outside of the first adsorption material chamber 41 (see FIGS. 29 and 30). The purge port 234 serves also as an evaporative port. The set plate 15 is also formed with an atmospheric port 244 for communication between the inside and outside of the fourth adsorption material chamber 44 (see FIG. 31). In the set plate 15, the cover member 240 and the link holes 237 and 238 of the set plate 15 in the eighth embodiment (see FIG. 24) are not provided. As alternatives thereto, the set plate 15 is formed with a first communication port 246 (see FIG. 29) for communication with the second adsorption material chamber 42, and a second link port 247 (see FIGS. 30 and 31) for communication with the third adsorption material chamber 43. These communication ports 246 and 247 communicate with each other via a communication pipe 248 (more specifically, an inner space of the communication pipe 248).

Also with the fuel vapor processing apparatus 30 of this embodiment, the effects and advantages similar to those of the above-described eighth embodiment can be achieved.

### Tenth Embodiment

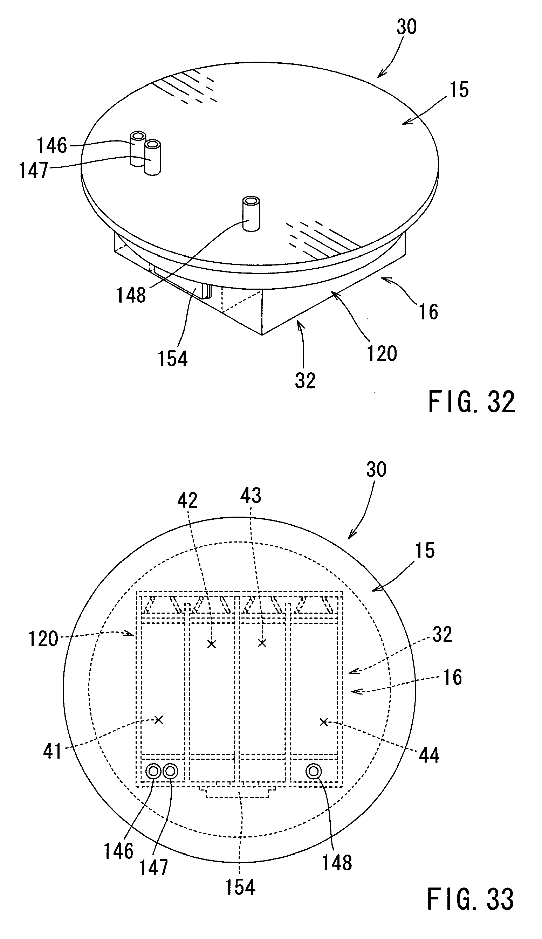

A tenth embodiment of the present invention will now be described. The tenth embodiment is partially different from the third embodiment described above, and thus only the difference is described. As shown in FIGS. 32 to 34, in the fuel vapor processing apparatus 30 of this embodiment, the first to fourth adsorption material chambers 41 to 44 of the canister 16 described in the third embodiment (see FIG. 15) are so configured that the flow direction of an evaporated gas in each chamber becomes parallel (horizontal) with respect to the set plate 15.

Also with the fuel vapor processing apparatus 30 of this embodiment, the effects and advantages similar to those of the above-described third embodiment can be achieved. In the tenth embodiment, the first to fourth adsorption material chambers 41 to 44 of the canister 16 are so configured that the flow direction of an evaporated gas in each chamber becomes parallel with respect to the set plate 15. Here, the direction that is parallel with respect to the set plate 15 means the direction that is parallel (horizontal in this embodiment) to the plate surface (horizontal surface in this embodiment) of the set plate 15.

### Eleventh Embodiment

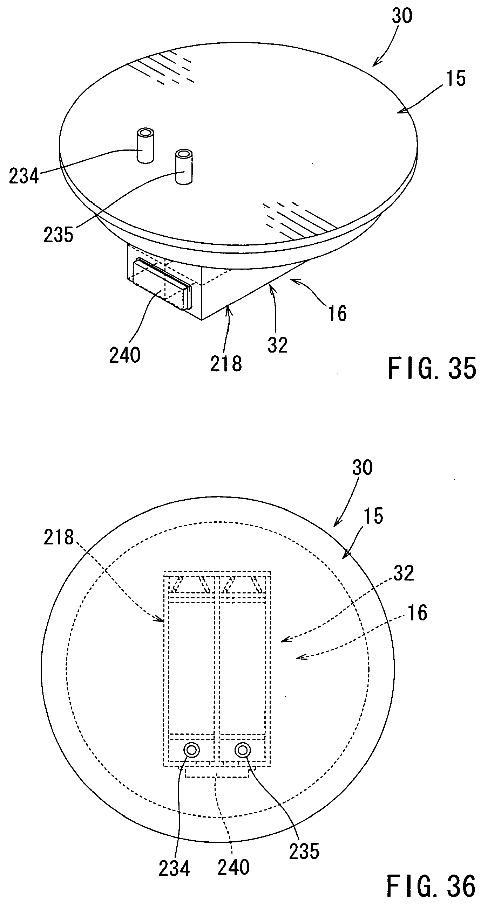

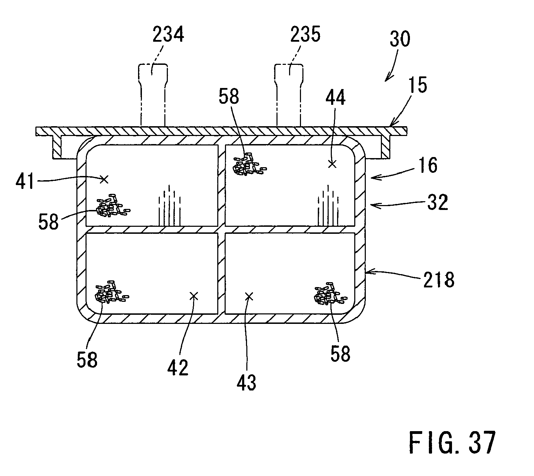

An eleventh embodiment of the present invention will now be described. The eleventh embodiment is partially different from the eighth embodiment described above, and thus only the difference is described. As shown in FIGS. 35 and 36, in the fuel vapor processing apparatus 30 of this embodiment, the first to fourth adsorption material chambers 41 to 44 of the canister 16 described in the eighth embodiment are so configured that the flow direction of the evaporated gas in each chamber becomes parallel with respect to the set plate 15 (in directions perpendicular to the sheet of FIG. 37)

Also with the fuel vapor processing apparatus 30 of this embodiment, the effects and advantages similar to those of the above-described eighth embodiment can be achieved.

While the invention has been described in detail, the foregoing description is in all aspects illustrative and not restrictive. It is understood that numerous other modifications and variations can be devised without departing from the scope of the invention. For example, the invention is applicable to a canister including at least three or more adsorption material chambers. The configuration of the canister case 32 can be arbitrarily changed as long as it can form three or more adsorption material chambers with respect to the set plate 15. It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A fuel vapor processing apparatus (30), comprising:
a set plate (15) configured to be able to close an attachment hole (13) of a fuel tank (12); and
a canister (16) including three or more adsorption material chambers (41-44; 171-176) each housing therein an adsorption material (58) for removably adsorbing a fuel vapor contained within a gas within the fuel tank (12), wherein
each two adjacent adsorption chambers in communication with each other are connected in series such that the gas flows in opposite directions from each other.

2. The fuel vapor processing apparatus (30) as claim 1, wherein in each of the adsorption material chambers (41-44; 171-176), the evaporated gas flows in a direction intersecting with the set plate ( 15).

3. The fuel vapor processing apparatus (30) as claim 1, wherein in each of the adsorption material chambers (41-44; 171-176), the evaporated gas flows in a direction parallel to the set plate (15).

4. The fuel vapor processing apparatus (30) as in any one of claims 1 to 3, wherein the set plate (15) is provided with a port (68; 113; 148; 202; 235) for communication between the inside of the canister (16) and the outside of the fuel tank (12).

5. The fuel vapor processing apparatus (30) as in any one of claims 1 to 4, wherein in relation to the adsorption material chamber located in the middle of three adsorption material chambers (41-44; 171-176) connected in series with each other, the other two adsorption material chambers are arranged in a row.

6. The fuel vapor processing apparatus (30) as in any one of claims 1 to 5, wherein in relation to the adsorption material chamber located in the middle of three adsorption material chambers (41-44; 171-176) connected in series with each other, the other two adsorption material chambers are arranged in different directions.

7. A fuel vapor processing apparatus (30) for attachment to a fuel tank (12), comprising:
an inlet device (71, 72; 111; 146; 200; 234; 243) arranged and constructed to introduce a gas containing a fuel vapor within the fuel tank (12);
a canister (16) coupled to the inlet device and arranged and constructed to adsorb the fuel vapor from the gas; and
an outlet device (68; 113; 148; 202; 235) coupled to the canister (16) and arranged and constructed to discharge the gas after adsorption of the fuel vapor by the canister (16); wherein:
the canister (16) comprises at least a first adsorption chamber, a second adsorption chamber and a third adsorption chamber (41-44; 171-176) connected in series with each other and each housing therein an adsorption material (58) for adsorbing the fuel vapor,
the gas can flow within the first adsorption chamber, the second adsorption chamber and the third adsorption chamber in a first direction, a second direction and a third direction, respectively, and
the first direction and the second directions are opposite to each other, and the second direction and the third directions are opposite to each other.

8. The fuel vapor processing apparatus (30) as in claim 7, wherein the first, second and third directions are parallel to each other.

9. The fuel vapor processing apparatus (30) as in claim 8, wherein the first, second and third directions are parallel to a vertical direction.

10. The fuel vapor processing apparatus (30) as in claim 8, wherein the first, second and third directions are parallel to a horizontal direction.

11. The fuel vapor processing apparatus (30) as in claim 7, wherein the first, second and third adsorption chambers are arranged in a horizontal direction.

12. The fuel vapor processing apparatus (30) as in claim 7, wherein the first, second and third adsorption chambers are arranged in a vertical direction.

13. The fuel vapor processing apparatus (30) as in claim 7, wherein the first and second adsorption chambers are arranged in a direction different from a direction of arrangement of the second and third adsorption chambers.
